# EUROPEAN PATENT APPLICATION

(11) **EP 2 439 388 A1**
(43) Date of publication of application: **11.04.2012**
(21) Application number: 10783348.5
(22) Date of filing: 31.05.2010
(51) Int. Cl.: F02C 1/05, F02C 7/08, F02C 7/26, F02C 7/275, F02C 9/18, F03G 6/00

(54) **SOLAR GAS TURBINE AND SOLAR GAS TURBINE POWER GENERATING DEVICE**

(30) Priority: 05.06.2009 JP 2009135808
(71) Applicant: Mitsubishi Heavy Industries, Ltd., Tokyo 108-8215 (JP)
(72) Inventor: AOYAMA, Kuniaki, Takasago-shi Hyogo 676-8686 (JP); INOUE, Kei, Takasago-shi Hyogo 676-8686 (JP); KOBAYASHI, Kazuta, Takasago-shi Hyogo 676-8686 (JP); TAGAWA, Masashi, Takasago-shi Hyogo 676-8686 (JP); OSADA, Toshiyuki, Takasago-shi Hyogo 676-8686 (JP); MASUDA, Masahiro, Takasago-shi Hyogo 676-8686 (JP)
(74) Representative: Henkel, Breuer & Partner
(86) International application number: PCT/JP2010/059201
(87) International publication number: WO 2010/140565

(57) **Abstract**

Provided is a solar gas turbine in which the capacitance of a start-up driving source used for compensating the shortage of a solar heat quantity at the startup/speed-rising time is reduced, thereby enabling efficient operation. The solar gas turbine comprises: a compressor (1) for taking in air and increasing the pressure thereof; a heat receiver (2) for heating the high-pressure air, the pressure of which has been increased by the compressor (1), by the heat of sunlight collected by a collector and increasing temperature; and a turbine (3) for converting thermal energy possessed by the high-temperature and high-pressure air to mechanical energy. In the solar gas turbine (GT1) including the compressor (1) equipped with a startup driving source for startup/speed-rising, the fluid flow in the heat receiver (2) is shut off and heat is accumulated in the period from the shutdown of the turbine (3) to the startup thereof.

## Description

### {Technical Field}

The present invention relates to a concentrated solar power gas turbine and a concentrated-solar-power-gas turbine power generation equipment driven with a compressible working fluid, such as air, heated by sunlight, and particularly relates to start-up/acceleration of a concentrated solar power gas turbine and a concentrated-solar-power-gas turbine power generation equipment.

### {Background Art}

Recently, natural energy, such as sunlight and wind power, has attracted attention from the viewpoint of solving environmental issues such as global warming.
Accordingly, a concentrated solar power gas turbine that utilizes sunlight, one kind of natural energy, and is driven by a high-temperature/high-pressure compressible working fluid, the temperature and the pressure of which have been increased by the heat of sunlight, and a concentrated-solar-power-gas turbine power generation equipment generating electricity by driving a generator with this concentrated solar power gas turbine have been proposed.

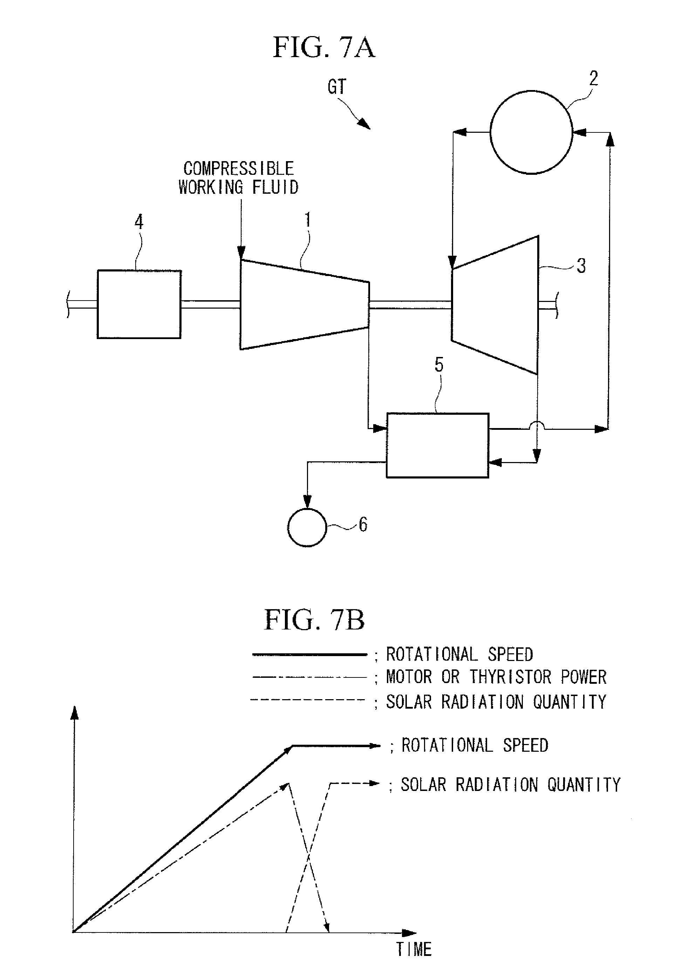

The concentrated solar power gas turbine GT shown in Fig. 7A is a system whose main components are a compressor 1 for compressing a compressible working fluid and increasing the pressure thereof, a solar central receiver 2 for heating the compressible working fluid with heat exchanged from sunlight and increasing the temperature thereof, and a turbine 3 for exchanging thermal energy possessed by the high-temperature/high-pressure compressible working fluid to mechanical energy. That is, the concentrated solar power gas turbine GT has the solar central receiver 2 that applies a pressure to the compressible working fluid and increases the temperature thereof by utilizing the thermal energy of sunlight, instead of a combustor which generates a high-temperature/high-pressure combustion gas by burning a fuel such as natural gas.

In this case, the solar central receiver 2 is an apparatus for converting sunlight to thermal energy and can increase the temperature of the high-pressure compressible working fluid by heating it with heat of light collected by a light collector (Heliostat, not shown in the drawing).
Furthermore, a concentrated-solar-power-gas turbine power generation equipment that generates electricity utilizing sunlight is constituted by connecting a generator 4 to the output shaft of the concentrated solar power gas turbine GT so as to drive the generator 4 with the concentrated solar power gas turbine GT. Note that reference sign 5 in the drawing denotes a reheater for preheating the high-pressure compressible working fluid, the pressure of which has been increased by the compressor 1, with exhaust heat of the compressible working fluid to be discharged to the atmosphere through a exhaust stack 6 after doing work in the turbine 3. This reheater 5 can be omitted, according to conditions, not to perform preheating.

In such a concentrated-solar-power-gas turbine power generation equipment, since the concentrated solar power gas turbine GT uses sunlight, natural energy which is influenced by weather, a response time of approximately several minutes is necessary for start-up/acceleration. That is, since the intensity of sunlight constantly varies due to the influence of weather, and the heat capacity of the solar central receiver 2 is large, input heat adjusted by changing the quantity or intensity of received sunlight is not immediately reflected in the operation of the concentrated solar power gas turbine GT. Therefore, it takes several minutes to adjust the rotational speed or the output of the turbine 3 to a desired level.

Accordingly, it is conceivable to promptly increase the speed to non-load low-speed rotation by compensating for the shortage in the amount of solar heat by using a high-capacity starter motor or thyristor as a start-up driving source, for example, as shown in Fig. 7B, at the start-up/acceleration time of the concentrated solar power gas turbine GT. That is, when the turbine 3 is started up or speeded up as shown by the solid line in the drawing at the start-up/acceleration time of the concentrated solar power gas turbine GT, in the operation condition provided with solar heat in an insufficient quantity as shown by the dashed line in the drawing, it is necessary to start up or speed up the compressor 1 and the turbine 3 by using the motor or thyristor power as shown by the dashed-and-dotted line.

On the other hand, in the start-up of a gas turbine plant including a combustor for burning a fuel to generate a high-temperature/high-pressure combustion gas, there is known a method in which the working fluid is partially extracted from the compressor and is bypassed to the turbine (for example, see Patent Literature 1).

### {Citation List}

### {Patent Literature}

{PTL 1} Japanese Unexamined Patent Application, Publication No. Sho 61-142335

### {Summary of Invention}

### {Technical Problem}

Incidentally, in a concentrated-solar-power-gas turbine power generation equipment including the above-described known concentrated solar power gas turbine GT, it is possible to promptly speed up to non-load low-speed rotation by using a high-capacity start-up driving source (e.g., a starter motor or thyristor) at the start-up/acceleration of the concentrated solar power gas turbine GT in order to compensate for the shortage of varying solar heat quantity. However, the high-capacity starter motor or thyristor is considerably expensive. Accordingly, there is a demand for efficient start-up/acceleration operation with a smaller-capacity start-up driving source.
The present invention has been made under the above-described circumstances, and the object of the present invention is to provide a concentrated solar power gas turbine and a concentrated-solar-power-gas turbine power generation equipment that enable efficient operation to allow a reduction in capacity of the start-up driving source used for compensating for the shortage of solar heat quantity at the start-up/acceleration.

### {Solution to Problem}

The present invention employs the following solutions for solving the above-mentioned problem.
The concentrated solar power gas turbine according to Claim 1 of the present invention is a concentrated solar power gas turbine that is constituted by including a compressor for taking in a compressible working fluid and increasing the pressure thereof, the compressor being provided with a start-up driving source for start-up/acceleration; a solar central receiver for heating the high-pressure compressible working fluid, the pressure of which has been increased by the compressor, by the heat of sunlight collected by a heliostat to increase the temperature thereof; and a turbine for converting thermal energy possessed by the high-temperature/high-pressure compressible working fluid to mechanical energy, wherein the fluid flow in the solar central receiver is shut off to store heat in the period from the shutdown of the turbine to the start-up thereof.

According to such a solar gas turbine, since heat is stored by shutting off the fluid flow in the solar central receiver in the period from the shutdown of the turbine to the start-up thereof, the high-temperature/high-pressure compressible working fluid heated in the solar central receiver can become ready for use within a relatively short time, which enables a reduction in capacity of the start-up driving source. That is, as the start-up driving source, it is possible to use a low-capacity driving source that can maintain a low range of the rated rotational speed of the turbine (for example, about 10 to 30 %) at the start-up and speed-up.

In the concentrated solar power gas turbine according to Claim 1, preferably, a three-way valve and a shut-off valve are disposed in this order from the compressor side in a low-temperature compressible fluid main path that connects the compressor and the solar central receiver and lets the high-pressure compressible working fluid flowing out from the compressor flow; a low-temperature compressible fluid main bypass path that is connected to the turbine via the three-way valve provided for bypassing the solar central receiver, and a low-temperature compressible fluid auxiliary bypass path, which is normally closed, is provided in parallel with the low-temperature bypass path, wherein the low-temperature compressible fluid auxiliary bypass path is opened at the start-up/acceleration of the turbine to raise the rotational speed of the compressor to a predetermined rotational speed at start-up using the start-up driving source; then the inlet and the outlet of the solar central receiver are opened to start heating of pipes in the solar central receiver with sunlight; and the compressible working fluid is circulated and is heated when the temperature of the pipes in the solar central receiver is increased to a high temperature not lower than a predetermined level.

In the concentrated solar power gas turbine according to Claim 1 or 2, preferably, the low-temperature compressible fluid main path includes a reheater for preheating the high-pressure compressible working fluid flowing out from the compressor by means of heat exchange with the high-temperature/high-pressure compressible working fluid discharged from the turbine; and the low-temperature compressible fluid main bypass path and the low-temperature compressible fluid auxiliary bypass path are disposed on the upstream or downstream side of the reheater. By doing so, exhaust heat possessed by the high-temperature/high-pressure compressible working fluid that has done work in the turbine can be efficiently used. Note that the heat resistance specifications of the three-way valve and the shut-off valve can be less restricted by disposing the low-temperature compressible fluid main bypass path and the low-temperature compressible fluid auxiliary bypass path on the upstream side of the reheater.

The concentrated solar power gas turbine according to Claim 4 of the present invention is a concentrated solar power gas turbine constituted by including a compressor for taking in a compressible working fluid and increasing the pressure thereof, the compressor being provided with a start-up driving source for start-up/acceleration; a solar central receiver for heating the high-pressure compressible working fluid, the pressure of which has been increased by the compressor, by the heat of sunlight collected by a heliostat to increase the temperature thereof; and a turbine for converting thermal energy possessed by the high-temperature/high-pressure compressible working fluid to mechanical energy, wherein the low-temperature compressible fluid main path is provided with an auxiliary combustor via a three-way valve, the auxiliary combustor being arranged in parallel with or in series with the solar central receiver; and the fluid flow in the solar central receiver is shut off to store heat in the period from the shutdown of the turbine to the start-up thereof.

According to such a concentrated solar power gas turbine, the low-temperature compressible fluid main path is provided with the auxiliary combustor via a three-way valve, the auxiliary combustor being arranged in parallel with or in series with the solar central receiver, and the fluid flow in the solar central receiver is shut off to store heat in the period from the shutdown of the turbine to the start-up thereof. Therefore, the high-temperature/high-pressure compressible working fluid heated in the solar central receiver can become ready for use within a relatively short time, which enables a reduction in capacity of the start-up driving source. That is, as the start-up driving source, it is possible to use a low-capacity driving source that can maintain a low range of the rated rotational speed of the turbine (for example, about 10 to 30 %) at the start-up and speed-up. In addition, since the low-temperature compressible fluid main path is provided with the auxiliary combustor, the turbine inlet temperature of the compressible working fluid can be maintained at a desired level by adjusting the distribution volume of the compressible working fluid or the amount of the fuel supplied to the auxiliary combustor according to the intensity of solar heat.

In the concentrated solar power gas turbine according to Claim 4, preferably, a three-way valve and a shut-off valve are disposed in this order from the compressor side in a low-temperature compressible fluid main path that connects the compressor and the solar central receiver and lets the high-pressure compressible working fluid flowing out from the compressor flow; a low-temperature compressible fluid main bypass path that is connected to the turbine via the three-way valve is provided for bypassing the solar central receiver, and a low-temperature compressible fluid auxiliary bypass path, which is normally closed, is provided in parallel with the low-temperature bypass path, wherein the three-way valve is operated for letting the whole volume of the compressible working fluid flow into the auxiliary combustor in the start-up/acceleration of the turbine to raise the rotational speed of the compressor to a predetermined rotational speed at start-up using the start-up driving source; then the inlet and the outlet of the solar central receiver are opened to start heating of pipes in the solar central receiver with sunlight; and the compressible working fluid is circulated and is heated when the temperature of the pipes in the solar central receiver is increased to a high temperature not lower than a predetermined level.

In the concentrated solar power gas turbine according to Claim 4 or 5, the low-temperature compressible fluid main path is preferably provided with a reheater for preheating the high-pressure compressible working fluid flowing out from the compressor by means of heat exchange with the high-temperature/high-pressure compressible working fluid discharged from the turbine. By doing so, the exhaust heat possessed by the high-temperature/high-pressure compressible working fluid that has done work in the turbine can be efficiently used.

The concentrated solar power gas turbine according to Claim 7 of the present invention is a concentrated solar power gas turbine constituted by including a compressor for taking in a compressible working fluid and increasing the pressure thereof, the compressor being provided with a start-up driving source for start-up/acceleration; a solar central receiver for heating the high-pressure compressible working fluid, the pressure of which has been increased by the compressor, by the heat of sunlight collected by a heliostat to increase the temperature thereof; and a turbine for converting thermal energy possessed by the high-temperature/high-pressure compressible working fluid to mechanical energy, wherein a control valve is provided in a low-temperature compressible fluid main path that connects the compressor and the solar central receiver and lets the high-pressure compressible working fluid flowing out from the compressor flowsolar central receiver; and a bypass control valve is provided in a low-temperature compressible fluid bypass path branching from the low-temperature compressible fluid main path on the upstream side of the control valve and reaching a exhaust stack, wherein heat is stored by controlling the fluid flow into the solar central receiver by opening the bypass control valve and slightly opening the control valve in the period from the shutdown of the turbine to the start-up thereof.

According to such a concentrated solar power gas turbine, the control valve is provided in the low-temperature compressible fluid main path that connects the compressor and the solar central receiver and lets the high-pressure compressible working fluid flowing out from the compressor flow; the bypass control valve is provided in the low-temperature compressible fluid bypass path branching from the low-temperature compressible fluid main path on the upstream side of the control valve and reaching the exhaust stack; and heat is stored in the period from the shutdown of the turbine to the start-up thereof by opening the bypass control valve and slightly opening the control valve to suppress the fluid flow into the solar central receiver to be small (for example, 10% or less). Therefore, the high-temperature/high-pressure compressible working fluid heated in the solar central receiver can become ready for use within a relatively short time, which enables a reduction in capacity of the start-up driving source. That is, as the start-up driving source, it is possible to use a low-capacity driving source that can maintain a low range of the rated rotational speed of the turbine (for example, about 10 to 30 %) at the start-up and speed-up.
In addition, since a small volume of fluid is flowing in the turbine even in the period from the shutdown of the turbine to the start-up thereof, the variation in the turbine inlet temperature is reduced, and the size of the bypass control valve can be reduced by the degree of reduced volume of the bypass flow.

The concentrated-solar-power-gas turbine power generation equipment according to Claim 8 of the present invention includes the concentrated solar power gas turbine according to any one of Claims 1 to 7 and a generator that is driven by the concentrated solar power gas turbine and thereby generates electricity.

According to such a concentrated-solar-power-gas turbine power generation equipment, since the system includes the concentrated solar power gas turbine according to any one of Claims 1 to 7 and a generator that is driven by the concentrated solar power gas turbine and thereby generates electricity, it is possible to reduce the capacity of the start-up driving source used for compensating for the shortage of solar heat quantity at the start-up/acceleration of the concentrated solar power gas turbine that is operated by using sunlight, natural energy, and to perform power generation by efficient operation.

### {Advantageous Effects of Invention}

According to the present invention described above, the heat stored by the solar central receiver before the stoppage of the concentrated solar power gas turbine and the concentrated-solar-power-gas turbine power generation equipment is effectively used to allow a reduction in the capacity of the start-up driving source (e.g., a starter motor or thyristor) used for compensating for the shortage of solar heat quantity at the start-up/acceleration and efficient operation with low facility cost. Furthermore, the heat stored by the solar central receiver before the stoppage of the concentrated solar power gas turbine and the concentrated-solar-power-gas turbine power generation equipment is effectively used to allow a reduction in time for switching from the start-up/acceleration operation using the start-up driving source to the operation using solar heat.

### {Brief Description of Drawings}

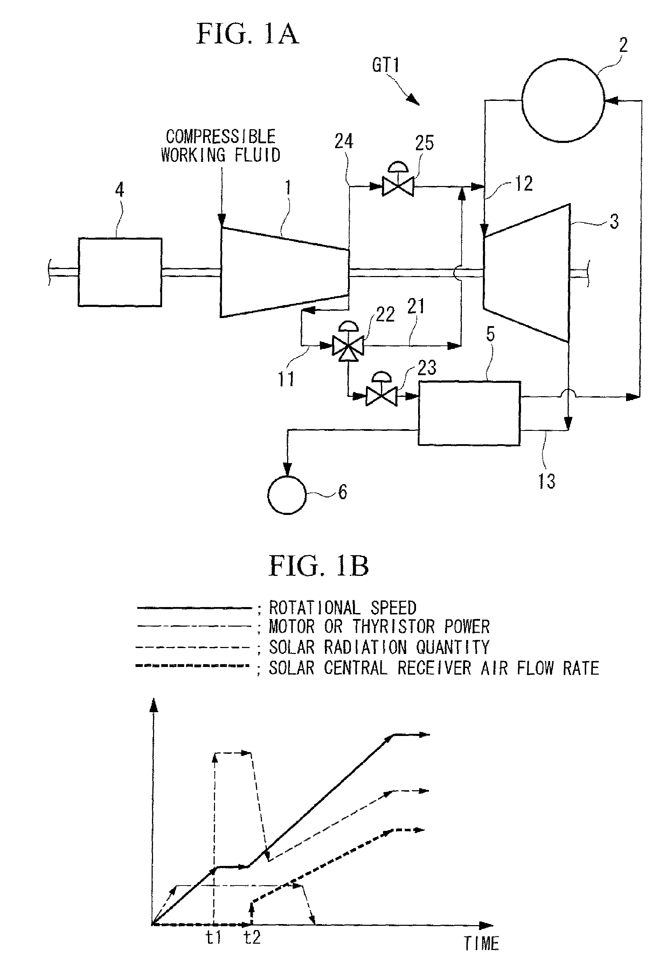

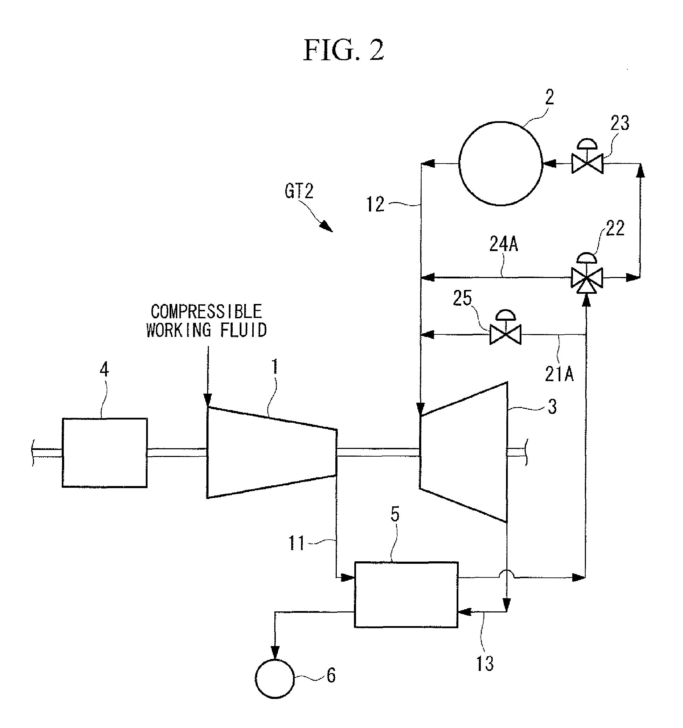

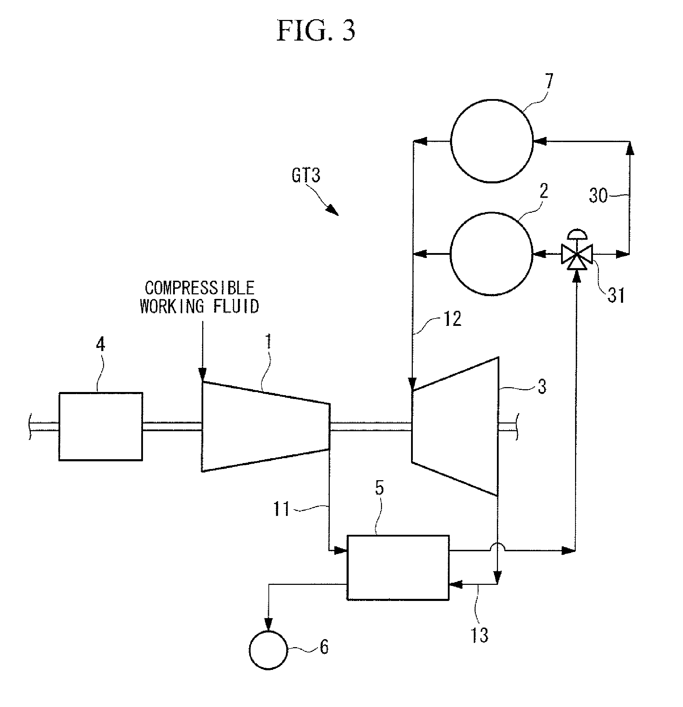

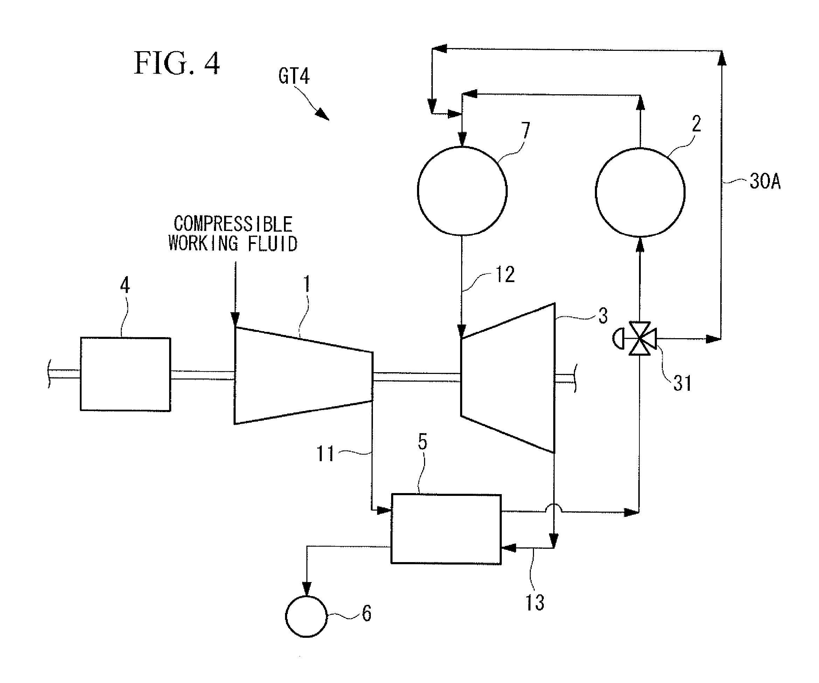

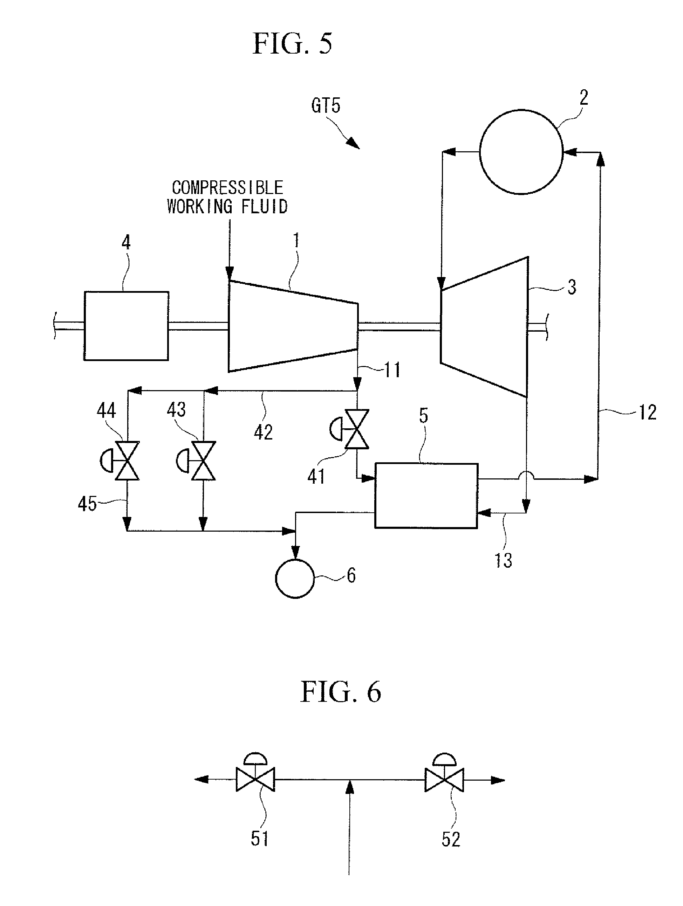

{Fig. 1A} Fig. 1A is a configuration diagram (system diagram) showing a first embodiment of the concentrated solar power gas turbine and the concentrated-solar-power-gas turbine power generation equipment according to the present invention.
{Fig. 1B} Fig. 1B is a graph showing examples of changes in the rotational speed, the motor or thyristor power, the solar heat quantity, and the solar central receiver air flow rate over time at the start-up/acceleration of the concentrated solar power gas turbine and the concentrated-solar-power-gas turbine power generation equipment according to the present invention.
{Fig. 2} Fig. 2 is a configuration diagram (system diagram) showing a first modification of the concentrated solar power gas turbine and the concentrated-solar-power-gas turbine power generation equipment according to the first embodiment shown in Fig. 1.
{Fig. 3} Fig. 3 is a configuration diagram (system diagram) showing a second embodiment of the concentrated soar power gas turbine and the concentrated-solar-power-gas turbine power generation equipment according to the present invention.
{Fig. 4} Fig. 4 is a configuration diagram (system diagram) showing a first modification of the concentrated solar power gas turbine and the concentrated-solar-power-gas turbine power generation equipment according to the second embodiment shown in Fig. 3.
{Fig. 5} Fig. 5 is a configuration diagram (system diagram) showing a third embodiment of the concentrated solar power gas turbine and the concentrated-solar-power-gas turbine power generation equipment according to the present invention.
{Fig. 6} Fig. 6 is a diagram showing a configuration example using two control valves instead of the three-way valve in each embodiment and modification.
{Fig. 7A} Fig. 7A is a configuration diagram (system diagram) showing an example of a known concentrated solar power gas turbine and concentrated-solar-power-gas turbine power generation equipment.
{Fig. 7B} Fig. 7B is a graph showing examples of changes in the rotational speed, the motor or thyristor power, and the solar heat quantity over time at the start-up/acceleration of the known concentrated solar power gas turbine and the concentrated-solar-power-gas turbine power generation equipment shown in Fig. 7A.

### {Description of Embodiments}

An embodiment of the concentrated solar power gas turbine and the concentrated-solar-power-gas turbine power generation equipment according to the present invention will be described below based on the drawings.

### <First Embodiment>

In an embodiment shown in Fig. 1A, the concentrated solar power gas turbine GT1 is constituted by including a compressor 1 for taking in a compressible working fluid and increasing the pressure thereof; a solar central receiver 2 for heating the high-pressure compressible working fluid, the pressure of which has been increased by the compressor 1, by the heat of sunlight collected by a heliostat (not shown in the drawing) to increase the temperature thereof; and a turbine 3 for converting thermal energy possessed by the high-temperature/high-pressure compressible working fluid to mechanical energy.
The concentrated solar power gas turbine GT1 shown in the drawing is provided with a generator 4 on the same axis connecting the compressor 1 and the turbine 3 and thereby serves as a concentrated-solar-power-gas turbine power generation equipment that generates electricity using sunlight.

The compressor 1 is a device for taking in a compressible working fluid and compressing it to a desired high pressure and is driven by using part of the output generated by the turbine 3 on the same axis. As the compressible working fluid to be compressed by the compressor 1, for example, air taken in from the atmosphere is used. In the description below, the compressible working fluid is described as air, but is not limited as such.
The air as the compressible working fluid, the pressure of which has been increased by the compressor 1, is introduced to the solar central receiver 2 through a high-pressure air path 11. In the structural example shown in the drawing, a reheater 5 is disposed in the high-pressure air path 11. This reheater 5 is a device for performing heat conversion between the high-pressure but low-temperature air, the pressure of which has been increased by the compressor 1, and the high-temperature/high-pressure air that has done work in the turbine 3. That is, reheater 5 is a heat exchanger for improving the thermal efficiency of the concentrated solar power gas turbine GT1 and the concentrated-solar-power-gas turbine power generation equipment by efficiently using the exhaust heat of the high-temperature/high-pressure air that has done work in the turbine 3 and then will be discharged to the atmosphere from a exhaust stack 6 to preheat the high-pressure but low-temperature air.

The high-pressure air is preheated during its passage through the reheater 5 to a temperature higher than the outlet temperature of the compressor 1 and is introduced to the solar central receiver 2 through the high-pressure air path 11.
The solar central receiver 2 is a device for converting sunlight to thermal energy and heats the high-pressure but low-temperature air using the heat of light collected by the heliostat (not shown in the drawing) and thereby increases the temperature of the high-pressure but low-temperature air. That is, the solar central receiver 2 is a heating device for heating the pipes and the high-pressure but low-temperature air in a large number of the internal pipes that let the high-pressure but low-temperature air flow therein by irradiating the pipes with light from the heliostat to increase the temperature thereof.

In the heliostat, the heat to be input into the solar central receiver 2 is controlled by adjusting the angle of the heliostat so that the outlet temperature of the high-temperature/high-pressure air heated by the solar central receiver 2 gives a predetermined rotational speed of the turbine in the speed-up period of the concentrated solar power gas turbine GT1 not performing power generation by the generator 4 or gives a predetermined power generation load on the generator 4 in the load operation period performing power generation by the generator 4.
In addition, the pipe temperature of the solar central receiver 2 is also controlled not to increase to a level higher than a predetermined temperature by adjusting the heat to be input into the solar central receiver 2 with the heliostat.
In general, since the heat capacity of the solar central receiver 2 is large, a change in the outlet temperature of the high-temperature air is delayed from a change in the input heat by several minutes or more. Therefore, the control is sluggish.

The high-pressure air heated by the solar central receiver 2 is changed to high-temperature/high-pressure air showing, for example, an outlet temperature of about 900 °C and is supplied to the turbine 3 through a high-temperature/high-pressure air path 12.
The high-temperature/high-pressure air supplied to the turbine 3 expands when it passes between a moving blade and a stationary blade in the turbine and rotates the turbine shaft integrated with the moving blade to generate a turbine output. The output generated by the turbine 3 is used as a power source for the compressor 1 and the generator 4 that are connected on the same axis. The high-temperature/high-pressure air that has done work in the turbine 3 is changed to high-temperature/high-pressure air having a pressure and a temperature that are lower than those at the turbine inlet (hereinafter also referred to as "used air") and is introduced to the reheater 5 through an exhaust air path 13. The temperature of this used air is further decreased by preheating the high-pressure air introduced to the reheater 5 through the high-pressure air path 11, and the used air is discharged to the atmosphere from the exhaust stack 6.

Furthermore, the above-described concentrated solar power gas turbine GT1 is provided with a high-pressure air main bypass path (low-temperature compressible fluid main bypass path) 21 branching from the high-pressure air path 11 and reaching the inlet of the turbine 3 so that the high-pressure air flowing out from the outlet of the compressor 1 flows therein to bypass the solar central receiver 2. The high-pressure air main bypass path 21 is branched from the high-pressure air path 11 via a three-way valve 22 disposed on the upstream side of the reheater 5. In addition, a shut-off valve 23 is disposed between the three-way valve 22 and the reheater 5.
Furthermore, the above-described concentrated solar power gas turbine GT1 is provided with a high-pressure air auxiliary bypass path (high-pressure compressible fluid auxiliary bypass path) 24 in parallel with the high-pressure air main bypass path 21. This high-pressure air auxiliary bypass path 24 is a path for introducing the low-temperature but high-pressure air flowing out from the outlet of the compressor 1 to the inlet of the turbine 3, and a bypass valve 25, which is normally closed, is provided in the high-pressure air auxiliary bypass path 24.

In the thus-constituted concentrated solar power gas turbine GT1, heat is stored by shutting off the fluid flow in the solar central receiver 2 in the period from the stoppage of the gas turbine by the shutdown of the turbine 3 to the start-up thereof, particularly, in the period from the stoppage of the gas turbine to the start-up thereof in, for example, daily start and stop (DSS).
This will be described specifically. In the heat-storing period from the shutdown of the turbine 3 to the start-up thereof, in order to maintain the warm state of the inside of the solar central receiver 2, path-switching portions (not shown in the drawing) disposed at the inlet and the outlet of the solar central receiver 2 are closed to shut off the high-pressure air path 11 and the high-temperature/high-pressure air path 12. At the same time as this operation, one of the three-way valve 22 and the shut-off valve 23 is operated to shut off the high-pressure air path 11 on the upstream side of the solar central receiver 2, and the high-pressure air main bypass path 21 and the high-pressure air auxiliary bypass path 24 are shut off by the bypass valve 25 and the three-way valve 22.

As a result, since the high-temperature/high-pressure air, having the temperature at the time of shutdown, is sealed inside the solar central receiver 2 without flowing outside, the decrease in temperature of the air due to heat dissipation toward the outside air is more gradual. That is, the high-temperature/high-pressure air sealed in the solar central receiver 2 can maintain the high temperature state for a relatively long time.

In order to restart the concentrated solar power gas turbine GT1 from the state that the heat is thus-stored in the solar central receiver 2, the concentrated solar power gas turbine GT1 includes a starter motor or thyristor (not shown in the drawing) connected to the main shaft of the compressor 1 and the turbine 3, as a restart-up driving source. Since this restart-up driving source performs start-up/acceleration of the turbine 3 by effectively using the heat stored in the solar central receiver 2, its capacity may be relatively small as long as the rotational speed at the start-up, which is determined with respect to the turbine rated rotational speed of the concentrated solar power gas turbine GT1, for example, about 10 to 30 % of the rated rotational speed, is maintained. That is, the restart-up driving source necessary for start-up/acceleration of the concentrated solar power gas turbine GT1 can be small by effectively using the heat stored in the period of the shutdown by conducting the procedure described below.

In the period of start-up/acceleration of the concentrated solar power gas turbine GT1, the bypass valve 25 is opened in the heat-storing state of the solar central receiver 2, and, as shown by the dashed-and-dotted line in Fig. 1B, the restart-up driving source is started up to raise the output to the start-up rotational speed of the compressor 1. The start-up rotational speed in this case is a value corresponding to that at the time t1 shown by the solid line in Fig. 1B. The air pressurized by operation of the compressor 1 is supplied to the turbine 3 through the high-pressure air auxiliary bypass path 24, in which the bypass valve 25 is opened and drives the turbine 3 together with the restart-up driving source.
After the rotational speed of the compressor 1 is thus-increased to the start-up rotational speed, the path-switching portions of the solar central receiver 2 are operated so that the inside of the solar central receiver 2 communicates with the high-pressure air path 11 and the high-temperature/high-pressure air path 12. However, at this point, the high-pressure air path 11 is still shut off by the three-way valve 22 or the shut-off valve 23.

Furthermore, at the same time as the above-described operation, solar heat is supplied to the solar central receiver 2 by adjusting the heliostat H. That is, as shown by the thin dashed line in Fig. 1B, supply of solar heat starts at the time t1. By supplying such solar heat, the internal pipes of the solar central receiver 2 are heated by the solar heat to increase the temperature thereof, and the heating is continued until the temperature reaches a predetermined pipe temperature. In this case, the predetermined pipe temperature is a temperature (for example, about 600°C) of a representative point previously determined for the internal pipes of the solar central receiver 2 and is determined by measuring temperatures of multiple points selected from positions where the temperature becomes highest.

When the temperatures of the internal pipes of the solar central receiver 2 reach the predetermined pipe temperatures, that is, at the time t2 shown in Fig. 1B, the shut-off of the high-pressure air path 11 by the three-way valve 22 or the shut-off valve 23 is released to start heating by letting the high-pressure air flow into the internal pipes of the solar central receiver 2. However, at this point, the bypass valve 25 is still closed to maintain the state that the high-pressure air main bypass path 21 and the high-pressure air auxiliary bypass path 24 are shut off.
As a result, as shown by the heavy dashed line in Fig. 1B, the air flow rate of the air flowing in and passing through the solar central receiver 2 increases with an increase in rotational speed, and the high-temperature/high-pressure air heated by the solar central receiver 2 is supplied to the turbine 3 after the time t2. Therefore, the output of the turbine 3 is increased, and the rotational speed shown by the solid line in the graph is also increased. The restart-up driving source is disconnected from the turbine main shaft to stop the operation thereof after the time t2 at which the heating of the high-pressure air by the solar central receiver 2 has been started.

Thus, in the above-described start-up/acceleration operation, since the fluid flow in the solar central receiver 2 is shut off to store heat in the period from the shutdown of the turbine 3 to the start-up thereof, the temperature of the high-temperature/high-pressure air heated in the solar central receiver 2 can become ready for use within a relatively short time from the starting of operation. Therefore, even if the capacity of the start-up driving source is reduced, the start-up/acceleration within a short time is possible. That is, as the start-up driving source of the concentrated solar power gas turbine GT1 in the start-up and speed-up, such as in DSS operation, it is possible to use inexpensive low-capacity equipment that can maintain a low range of the rated rotational speed (for example, about 10 to 30 %) with respect to the rated rotational speed.

After such switching to ordinary operation of the concentrated solar power gas turbine GT1, the heat input to the solar central receiver 2 from the heat collector is adjusted for controlling the operation to set the solar central receiver outlet temperature of the high-temperature/high-pressure air supplied to the turbine 3 to a desired level. In addition, the temperatures of the internal pipes in the solar central receiver 2 are also controlled not to increase to levels higher than a predetermined temperature by adjusting the heat to be input to the solar central receiver 2 with the heliostat.
Furthermore, the rotational speed of the concentrated solar power gas turbine GT1 can be controlled to a desired level according to various conditions such as power generation load, for example, by adjusting the volume of the bypass flow to the high-pressure air main bypass path 21 by operating the three-way valve 22.

Incidentally, in the above-described embodiment shown in Fig. 1A, the high-pressure air main bypass path 21 and the high-pressure air auxiliary bypass path 24 are disposed so as to branch from the upstream side of the reheater 5. Accordingly, the three-way valve 22, the shut-off valve 23, and the bypass valve 25 that are disposed in the high-pressure air main bypass path 21 and the high-pressure air auxiliary bypass path 24 handle high-pressure air before being heated by the reheater 5. Therefore, these valves can be equipment that has less-restrictive heat resistance specifications, which is advantageous in terms of cost.

The concentrated solar power gas turbine GT2 in the above-described embodiment may be constituted as the concentrated solar power gas turbine GT2 shown in Fig. 2 as a first modification. In the constitution of this modification, a high-pressure air main bypass path 21A and a high-pressure air auxiliary bypass path 24A branch from the high-pressure air path 11 on the downstream side of the reheater 5. By employing such a constitution, since the temperature of the high-pressure air that passes through the three-way valve 22, the shut-off valve 23, and the bypass valve 25 is increased by being heated by the reheater 5, it is necessary to raise the grade of the heat resistance specifications of these valves. Accordingly, the cost of equipment is increased, but other functions and effects, such as heat storage in the solar central receiver 2 by shut-off of the fluid flow in the period from the shutdown of the turbine to the start-up thereof, are the same.
Note that in the above-described embodiment, preheating of the high-pressure air is performed by disposing the reheater 5, but a constitution in which the reheater 5 is omitted according to various conditions not to perform reheating is also possible.

### <Second Embodiment>

Next, the concentrated solar power gas turbine and the concentrated-solar-power-gas turbine power generation equipment according to the present invention will be described based on Fig. 3 showing a second embodiment. Note that the portions similar to those in the above-described embodiment are designated with the same reference numerals, and detailed descriptions thereof are omitted.
The concentrated solar power gas turbine GT3 shown in Fig. 3 is, as in the above-described embodiment, constituted by including a compressor 1 for taking in air (compressible working fluid) and increasing the pressure thereof; a solar central receiver 2 for heating the high-pressure air, the pressure of which has been increased by the compressor 1, by the heat of sunlight collected by a heliostat to increase the temperature thereof; and a turbine 3 for converting thermal energy possessed by the high-temperature/high-pressure air to mechanical energy. The embodiment shown in the drawing includes a reheater 5, but the constitution is not limited thereto.

In the concentrated solar power gas turbine GT3 of this embodiment, a high-pressure air bypass path 30 branches from the high-pressure air path 11 that connects the compressor 1 and the solar central receiver 2 and lets the high-pressure air flowing out from the compressor 1 flow so as to bypass the solar central receiver 2. This high-pressure air bypass path 30 branches from the high-pressure air path 11 via a three-way valve 31.
In the high-pressure air bypass path 30, an auxiliary combustor 7 is disposed in parallel with the solar central receiver 2. This auxiliary combustor 7 is a device for heating the high-pressure air by the heat generated by burning a fuel in order to compensate for unstable heating by sunlight in the solar central receiver 2. Furthermore, the high-pressure air bypass path 30 is disposed so as to merge with the high-pressure air path 11 on the downstream side of the solar central receiver 2 and to supply the high-temperature/high-pressure air to the turbine 3.

The thus-constituted concentrated solar power gas turbine GT3 can store heat by shutting off the fluid flow in the solar central receiver 2 in the period from the stoppage of the gas turbine by the shutdown of the turbine 3 to the start-up thereof.
That is, in the heat-storing period from the shutdown of the turbine 3 to the start-up thereof, in order to maintain the warm state of the inside of the solar central receiver 2, path-switching portions (not shown in the drawing) disposed at the inlet and the outlet of the solar central receiver 2 are closed to shut off the solar central receiver 2 from the high-pressure air path 11 and the high-temperature/high-pressure air path 12. At the same time as this operation, the three-way valve 31 is operated in such a manner that the flow of the high-pressure air path 11 is entirely introduced to the auxiliary combustor 7. As a result, since the high-temperature/high-pressure air, having the temperature at shutdown time, is sealed inside the solar central receiver 2 without flowing outside, the decrease in temperature of the air due to heat dissipation toward the outside air is more gradual, allowing the high-temperature state to be maintained for a relatively long time.

In order to restart the concentrated solar power gas turbine GT3 from the state that heat is thus-stored in the solar central receiver 2, the concentrated solar power gas turbine GT3 includes a restart-up driving source (starter motor or thyristor, not shown in the drawing) connected to the main shaft of the compressor 1 and the turbine 3. Since this restart-up driving source performs start-up/acceleration of the turbine 3 by effectively using the heat stored in the solar central receiver 2, its capacity may be relatively small as long as the rotational speed at start-up, which is determined with respect to the turbine rated rotational speed of the concentrated solar power gas turbine GT3, for example, about 10 to 30 % of the rated rotational speed, is maintained. That is, the restart-up driving source necessary for start-up/acceleration of the concentrated solar power gas turbine GT3 can be of reduced capacity by effectively using the heat stored in the period of the shutdown.

At the time of start-up/acceleration of the concentrated solar power gas turbine GT3, the rotational speed of the compressor 1 is raised to the start-up rotational speed by increasing the output by starting up the restart-up driving source from the state in that heat stored in the solar central receiver 2. The three-way valve 31 introduces the air pressurized by operation of the compressor 1 to the high-pressure air bypass path 30 and the auxiliary combustor 7 to which the air flows and passes through. This high-pressure air is supplied to the turbine 3 and drives the turbine 3 together with the restart-up driving source.
After the rotational speed of the compressor 1 is thus-increased to the start-up rotational speed, the path-switching portions of the solar central receiver 2 are operated so that the inside of the solar central receiver 2 communicates with the high-pressure air path 11 and the high-temperature/high-pressure air path 12. However, at this point, the solar central receiver 2 is still shut off the high-pressure air path 11 by the three-way valve 31.

Furthermore, at the same time as the above-described start-up of the restart-up driving source, solar heat is supplied to the solar central receiver 2 by adjusting the heliostat H. By supplying such solar heat, the internal pipes of the solar central receiver 2 are heated by the solar heat to increase the temperature thereof, and the heating is continued until the temperature reaches a predetermined pipe temperature. In this case, the predetermined pipe temperature is, as in the above-described embodiment, a temperature (for example, about 600°C) of a representative point previously determined for the internal pipes of the solar central receiver 2 and is determined by measuring temperatures of multiple points selected from positions where the temperature becomes highest. The high-pressure air path 11 in this case is shut off by the three-way valve 22 and communicates with the auxiliary combustor 7 through the high-pressure air bypass path 30.

When the temperatures of the internal pipes of the solar central receiver 2 reach the predetermined pipe temperatures, the path-switching portions of the solar central receiver 2 are operated, and the three-way valve 31 is switched to release the shut-off between the solar central receiver 2 and the high-pressure air path 11. As a result, high-pressure air is introduced into the internal pipes of the solar central receiver 2 to start heating of the high-pressure air flowing in the internal pipes.
As a result, the solar central receiver air flow rate of the air flowing in and passing through the solar central receiver 2 increases with an increase in rotational speed, and the high-temperature/high-pressure air heated by the solar central receiver 2 is supplied to the turbine 3. Therefore, the output of the turbine 3 is increased, and the rotational speed of the turbine 3 is also increased.
The restart-up driving source is disconnected from the turbine main shaft to stop the operation thereof after the heating of the high-pressure air by the solar central receiver 2 has been started.

Thus, in the above-described start-up/acceleration operation, since the fluid flow in the solar central receiver 2 is shut off to store heat in the period from the shutdown of the turbine 3 to the start-up thereof, the temperature of the high-temperature/high-pressure air heated in the solar central receiver 2 can become ready for use within a relatively short time from the starting of operation. Therefore, even if the capacity of the start-up driving source is reduced, the start-up/acceleration within a short time is possible. That is, as the start-up driving source in the start-up and speed-up of the concentrated solar power gas turbine GT3, such as in DSS operation, it is possible to use inexpensive low-capacity equipment that can maintain a low range of the rated rotational speed (for example, about 10 to 30 %) with respect to the rated rotational speed.

After such switching to ordinary operation of the concentrated solar power gas turbine GT3, the heat input to the solar central receiver 2 from the heat collector is adjusted for controlling the operation to set the solar central receiver outlet temperature of the high-temperature/high-pressure air supplied to the turbine 3 to a desired level. In addition, the shortage of solar heat when the intensity of sunlight is low is compensated to allow stable operation control of the concentrated solar power gas turbine GT3 by adjusting the heat quantity obtained by burning a fuel in the auxiliary combustor 7 or by adjusting the volume of high-pressure air distributed by the three-way valve 31 to the solar central receiver 2 and the auxiliary combustor 7.
In addition, prompt start-up is possible by using the auxiliary combustor 7 in the start-up/acceleration when the quantity of stored heat is insufficient. Furthermore, the auxiliary combustor 7 can be easily cooled by introducing part of the high-pressure air to the auxiliary combustor 7 through bypassing.

Incidentally, in the above-described embodiment shown in Fig. 3, the auxiliary combustor 7 and the solar central receiver 2 are arranged in parallel with each other. However, in this embodiment, for example, as in a first modification shown in Fig. 4, the auxiliary combustor 7 and the solar central receiver 2 may be arranged in series. In such a case, a three-way valve 31 is disposed in the high-pressure air path 11 on the upstream side of the solar central receiver 2, and a high-pressure air bypass path 30A is provided so as to bypass the solar central receiver 2 via the three-way valve 31 and merge with the high-pressure air path 11 on the upstream side of the auxiliary combustor 7.

By employing such a constitution, heat is stored as in the above-described embodiment, which allows a reduction in capacity of the restart-up driving source and stable operation even if the intensity of sunlight is low.
Furthermore, when the auxiliary combustor 7 is used in ordinary operation, since the high-temperature/high-pressure air heated by the solar central receiver 2 is supplied as the air for burning a fuel, the discharge of unburned fuel can be reduced by the burning.
Note that also in this embodiment, the reheater 5 is provided for preheating the high-pressure air, as in the above-described first embodiment, but a constitution in which the reheater 5 is omitted according to various conditions not to perform preheating is also possible.

### <Third Embodiment>

Next, the concentrated solar power gas turbine and the concentrated-solar-power-gas turbine power generation equipment according to the present invention will be described based on Fig. 5 showing a third embodiment. Note that the portions similar to those in the above-described embodiments are designated with the same reference numerals, and detailed descriptions thereof are omitted.
The concentrated solar power gas turbine GT5 shown in Fig. 5 is, as in the above-described embodiment, constituted by including a compressor it for taking in air (compressible working fluid) and increasing the pressure thereof; a solar central receiver 2 for heating the high-pressure air, the pressure of which has been increased by the compressor 1, by the heat of sunlight collected by a heliostat to increase the temperature thereof; and a turbine 3 for converting thermal energy possessed by the high-temperature/high-pressure air to mechanical energy. The embodiment shown in the drawing includes a reheater 5, but the constitution is not limited thereto.

In the concentrated solar power gas turbine GT5 of this embodiment, a control valve 41 is disposed in the high-pressure air path 11 that connects the compressor 1 and the solar central receiver 2 and lets the high-pressure air flowing out from the compressor 1 flow, and a bypass control valve 43 is provided in a high-pressure air bypass path 42 branching from the high-pressure air path 11 on the upstream side of the control valve 41 and reaching the exhaust stack 6. In this case, since the control valve 41 and the bypass control valve 43 have adjustable openings, the air flow rates flowing in the high-pressure air path 11 and the high-pressure air bypass path 42 can be controlled.
Furthermore, a blow off valve path 45 provided with a blow off valve 44 is disposed so that the blow off valve 44 is in parallel with the bypass control valve 43. Note that this blow off valve 44 is closed in ordinary operation.

In the thus-constituted concentrated solar power gas turbine GT5, heat can be stored in the period from the shutdown of the turbine 3 to the start-up thereof by reducing the fluid flow to the solar central receiver 2 by opening the bypass control valve 43 and slightly opening the control valve 41.
That is, in the period from the shutdown of the turbine 3 to the start-up thereof, in order to maintain the warm state of the solar central receiver 2, the bypass control valve 43 is fully opened and the control valve 41 is slightly opened so that almost all (for example, about 90%) of the flowing air is discharged from the exhaust stack 6 by bypassing the solar central receiver 2. In other words, the degree of the opening of the slightly opened bypass control valve 43 is set in such a manner that part (for example, a small volume of 10 % or less) of the flowing air flows in and passes through the solar central receiver 2.

By thus limiting the volume of the air flow into the solar central receiver 2 to be small, the volume of the high-temperature/high-pressure air having the temperature at the time of shutdown flowing out from the solar central receiver 2 is limited to a low level. Therefore, the temperature of the high-temperature/high-pressure air in the solar central receiver 2 is gradually decreased by practical heat dissipation toward the outside air. That is, since the high-temperature/high-pressure air present in the solar central receiver 2 at the shutdown is maintained in the high temperature state for a relatively long time, heat storage in the period of the shutdown is possible.

As a result, the high-temperature/high-pressure air heated in the solar central receiver 2 can become ready for use within a relatively short time at the starting of operation, which allows a reduction in capacity of the start-up driving source. That is, it is possible to use a low-capacity start-up driving source that can maintain a low range of the rated rotational speed of the turbine 3 (for example, about 10 to 30 %) at the start-up/acceleration.
Furthermore, since a small volume of the high-temperature/high-pressure air flows in the turbine 3 in the period from the shutdown of the turbine 3 to the start-up thereof, the turbine inlet temperature in the period of shutdown varies less. Since a small volume of the air flows into the solar central receiver 2, the bypassing flow rate is reduced by the volume. Accordingly, the size of the bypass control valve 43 may be small.

In each of the above-described embodiments and modifications, the three-way valves 22 and 31, for example, shown in Fig. 1A may be constituted by combining two control valves 51 and 52 as shown in Fig. 6.
Though such a constitution requires two control valves 51 and 52 instead of a single three-way valve, the control valves 51 and 52 can control the flow rate with higher precision compared to that by a three-way valve, due to its structure.

Thus, according to each of the above-described embodiments, the heat stored by the solar central receiver before the stoppage of the concentrated solar power gas turbine is effectively used to allow a reduction in the capacity of the start-up driving source used for compensating for the shortage of solar heat quantity at the start-up/acceleration and efficient operation with low facility cost.
Furthermore, by effectively using the heat stored by the solar central receiver 2 before the stoppage of the concentrated solar power gas turbine, the time for switching from the start-up/acceleration operation using the start-up driving source to the operation using solar heat can be shortened.
Accordingly, the above-described invention is suitable for a concentrated solar power gas turbine and a concentrated-solar-power-gas turbine power generation equipment having an operating procedure in which operation and shutdown are repeated at a relatively short period, such as in DSS operation.
Furthermore, the present invention is not limited to the above-described embodiments and can be suitably modified within a range that does not depart from the spirit of the present invention, for example, the reheater 5 may be provided or not.

### {Reference Signs List}

- 1: compressor
- 2: solar central receiver
- 3: turbine
- 4: generator
- 5: reheater
- 6: exhaust stack
- 7: auxiliary combustor
- 11: high-pressure air path (low-temperature compressible fluid main path)
- 12: high-temperature/high-pressure air path
- 13: exhaust air path
- 21, 21A: high-pressure air main bypass path (high-pressure compressible fluid main bypass path)
- 22, 31: three-way valve
- 23: shut-off valve
- 24, 24A: high-pressure air auxiliary bypass path (high- pressure compressible fluid auxiliary bypass path)
- 25: bypass valve
- 30,: 30A high-pressure air bypass path
- 41, 51, 52: control valve
- 42: high-pressure air bypass path
- 43: bypass control valve
- GT1 to GT5: concentrated solar power gas turbine

## Claims

1. A concentrated solar power gas turbine constituted by comprising a compressor for taking in a compressible working fluid and increasing the pressure thereof, the compressor being provided with a start-up driving source for start-up/acceleration; a solar central receiver for heating the high-pressure compressible working fluid, the pressure of which has been increased by the compressor, by the heat of sunlight collected by a heliostat to increase the temperature thereof; and a turbine for converting thermal energy possessed by the high-temperature/high-pressure compressible working fluid to mechanical energy, wherein
the fluid flow in the solar central receiver is shut off to store heat in the period from the shutdown of the turbine to the start-up thereof.

2. The concentrated solar power gas turbine according to Claim 1, wherein
a three-way valve and a shut-off valve are disposed in this order from the compressor side in a low-temperature compressible fluid main path that connects the compressor and the solar central receiver and lets the high-pressure compressible working fluid flowing out from the compressor flow;
a low-temperature compressible fluid main bypass path that is connected to the turbine via the three-way valve is provided for bypassing the solar central receiver, and a low-temperature compressible fluid auxiliary bypass path, which is normally closed, is provided in parallel with the low-temperature bypass path,
wherein the low-temperature compressible fluid auxiliary bypass path is opened at the start-up/acceleration of the turbine to raise the rotational speed of the compressor to a predetermined rotational speed at start-up using the start-up driving source; then the inlet and the outlet of the solar central receiver are opened to start heating of pipes in the solar central receiver with sunlight; and the compressible working fluid is circulated and is heated when the temperature of the pipes in the solar central receiver is increased to a high temperature not lower than a predetermined level.

3. The concentrated solar power gas turbine according to Claim 1 or 2, wherein
the low-temperature compressible fluid main path includes a reheater for preheating the high-pressure compressible working fluid flowing out from the compressor by means of heat exchange with the high-temperature/high-pressure compressible working fluid discharged from the turbine; and the low-temperature compressible fluid main bypass path and the low-temperature compressible fluid auxiliary bypass path are disposed on the upstream or downstream side of the reheater.

4. A concentrated solar power gas turbine constituted by comprising a compressor for taking in a compressible working fluid and increasing the pressure thereof, the compressor being provided with a start-up driving source for start-up/acceleration; a solar central receiver for heating the high-pressure compressible working fluid, the pressure of which has been increased by the compressor, by the heat of sunlight collected by a heliostat to increase the temperature thereof; and a turbine for converting thermal energy possessed by the high-temperature/high-pressure compressible working fluid to mechanical energy, wherein
a low-temperature compressible fluid main path is provided with an auxiliary combustor via a three-way valve, the auxiliary combustor being arranged in parallel with or in series with the solar central receiver; and the fluid flow in the solar central receiver is shut off to store heat in the period from the shutdown of the turbine to the start-up thereof.

5. The concentrated solar power gas turbine according to Claim 4, wherein
a three-way valve and a shut-off valve are disposed in this order from the compressor side in a low-temperature compressible fluid main path that connects the compressor and the solar central receiver and lets the high-pressure compressible working fluid flowing out from the compressor flow;
a low-temperature compressible fluid main bypass path that is connected to the turbine via the three-way valve is provided for bypassing the solar central receiver, and a low-temperature compressible fluid auxiliary bypass path, which is normally closed, is provided in parallel with the low-temperature bypass path,
the three-way valve is operated for letting the whole volume of the compressible working fluid flow into the auxiliary combustor in the start-up/acceleration of the turbine to raise the rotational speed of the compressor to a predetermined rotational speed at start-up using the start-up driving source; then the inlet and the outlet of the solar central receiver are opened to start heating of pipes in the solar central receiver with sunlight; and the compressible working fluid is circulated and is heated when the temperature of the pipes in the solar central receiver is increased to a high temperature not lower than a predetermined level.

6. The concentrated solar power gas turbine according to Claim 4 or 5, wherein
the low-temperature compressible fluid main path is provided with a reheater for preheating the high-pressure compressible working fluid flowing out from the compressor by means of heat exchange with the high-temperature/high-pressure compressible working fluid discharged from the turbine.

7. A concentrated solar power gas turbine constituted by comprising a compressor for taking in a compressible working fluid and increasing the pressure thereof, the compressor being provided with a start-up driving source for start-up/acceleration; a solar central receiver for heating the high-pressure compressible working fluid, the pressure of which has been increased by the compressor, by the heat of sunlight collected by a heliostat to increase the temperature thereof; and a turbine for converting thermal energy possessed by the high-temperature/high-pressure compressible working fluid to mechanical energy, wherein
a control valve that is provided in a low-temperature compressible fluid main path that connects the compressor and the solar central receiver and lets the high-pressure compressible working fluid flowing out from the compressor flow; and
a bypass control valve that is provided in a low-temperature compressible fluid bypass path branching from the low-temperature compressible fluid main path on the upstream side of the control valve and reaching an exhaust stack, wherein
heat is stored by controlling the fluid flow into the solar central receiver by opening the bypass control valve and slightly opening the control valve in the period from the shutdown of the turbine to the start-up thereof.

8. A concentrated-solar-power-gas turbine power generation equipment comprising the concentrated solar power gas turbine according to any one of Claims 1 to 7 and a generator that is driven by the concentrated solar power gas turbine and thereby generates electricity.
